(19) Europäisches Patentamt / European Patent Office / Office européen des brevets

(11) **EP 4 498 119 A1**

(12) **EUROPEAN PATENT APPLICATION**

(43) Date of publication:
**29.01.2025 Bulletin 2025/05**

(21) Application number: **24158983.7**

(22) Date of filing: **21.02.2024**

(51) International Patent Classification (IPC):
**G01S 7/41** (2006.01)     **G01S 13/931** (2020.01)

(52) Cooperative Patent Classification (CPC):
**G01S 13/867; G01S 13/89; G01S 13/931**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.07.2023   JP 2023123818**

(71) Applicant: **KABUSHIKI KAISHA TOSHIBA**
**Minato-ku**
**Tokyo 105-8001 (JP)**

(72) Inventors:
• **Ban, Koichiro**
  **Tokyo, 105-0023 (JP)**
• **Kubota, Hiroshi**
  **Tokyo, 105-0023 (JP)**
• **Kimura, Katsuyuki**
  **Tokyo, 105-0023 (JP)**

(74) Representative: **Henkel & Partner mbB**
**Patentanwaltskanzlei, Rechtsanwaltskanzlei**
**Maximiliansplatz 21**
**80333 München (DE)**

(54) **RANGING SUPPORT DEVICE, RANGING SYSTEM, AND RANGING SUPPORT METHOD**

(57)     According to one approach, a ranging support device includes a first image acquirer configured to acquire a first image that is generated by a capturing device of a vehicle that captures a front environment including a landmark, the landmark including a main surface where a plurality of areas with different reflectances are provided; a landmark detector configured to detect a position of the landmark in the first image; a second image acquirer configured to acquire a second image that is generated by a ranging device that measures a distance with respect to the front environment; and a distance calculator configured to specify, in the second image, each of areas corresponding to the plurality of areas on the landmark included in the first image, calculate distances between the plurality of areas on the landmark and the vehicle based on pixel values of the areas specified, and calculate a distance between the vehicle and the landmark based on the distances calculated for each of the areas.

FIG. 1

EP 4 498 119 A1

**Description**

FIELD

An approach of the present invention relates to a ranging support device, a ranging system, and a ranging support method.

BACKGROUND

At a time of stopping a train that is controlled by an autonomous driving system, it is conceivable to use a method of stopping the train by measuring a distance to a landmark present at a predetermined position by using a ranging device, such as a LiDAR (Light Detection and Ranging) device, and controlling a speed of the train by using a brake or the like, such that the train is stopped at a predetermined position.

To stop the train accurately at a desired position, accurate measurement of the distance has to be possible, from when the distance between the train and the landmark is great (start of application of the brake) to when the distance is small (immediately before stopping). Moreover, compared with cars and the like, a train has a greater braking distance, and thus, measurement of the distance to the landmark has to be started from a greater distance.

When a person (driver) is to stop a train, whether the train can be stopped at a desired position depends greatly on the skill of the driver, and it is important that the distance from the train to the landmark is notified to the driver accurately and in real time.

Now, if reflectance of a target object is constant, intensity of reflected laser light is small when the distance from the LiDAR device to the target object is great, and the intensity of the reflected laser light is great when the distance from the LiDAR device to the target object is small. Here, if light receiving sensitivity of an optical receiver is adjusted to suit the former case, the reflected laser light is saturated in the latter case and the distance cannot be accurately measured. However, if the light receiving sensitivity of the optical receiver is adjusted to suit the latter case, the reflected laser light becomes too small in the former case and cannot be detected.

In this regard, a method of changing laser transmission intensity or light receiving sensitivity according to the reflectance or the distance from the LiDAR device to the target object is also conceivable, but such a method requires laser or the optical receiver to be dynamically controlled according to the landmark or environment, and makes a device complicated.

BRIEF DESCRIPTION OF THE DRAWINGS

FIG. 1 is a block diagram showing a ranging system according to a first approach;
FIG. 2 is a diagram showing the ranging system in operation;
FIG. 3 is a front view of a landmark;
FIG. 4 is a diagram showing an example of a forward image;
FIG. 5 is a diagram showing a distance image;
FIG. 6 is a diagram showing another example of the forward image;
FIG. 7 is a diagram showing an example of a template image;
FIG. 8 is a flowchart showing an example of a process performed by a ranging support device;
FIG. 9 is a diagram describing an example operation of a landmark detector;
FIG. 10 is a block diagram showing a ranging system according to a second approach; and
FIG. 11 is a block diagram showing an example hardware configuration according to an approach of the present invention.

DETAILED DESCRIPTION

A ranging support device includes: a first image acquirer configured to acquire a first image that is generated by a capturing device of a vehicle that captures a front environment including a landmark, the landmark including a main surface where a plurality of areas with different reflectances are provided; a landmark detector configured to detect a position of the landmark in the first image; a second image acquirer configured to acquire a second image that is generated by a ranging device that measures a distance with respect to the front environment; and a distance calculator configured to specify, in the second image, each of areas corresponding to the plurality of areas on the landmark included in the first image, calculate distances between the plurality of areas on the landmark and the vehicle based on pixel values of the areas specified, and calculate a distance between the vehicle and the landmark based on the distances calculated for each of the areas.

Hereinafter, approaches of the present invention will be described with reference to the drawings.

(First Approach)

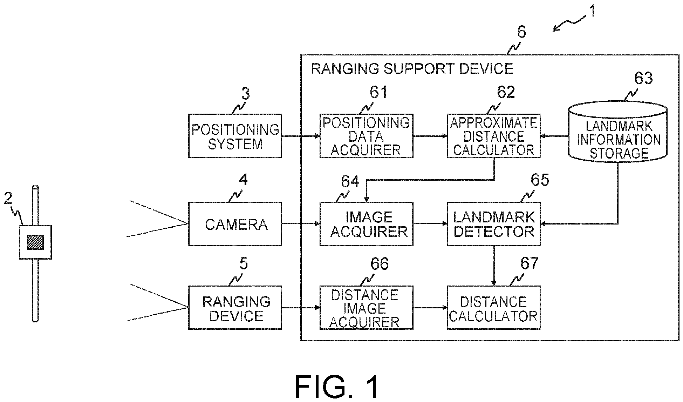

FIG. 1 is a block diagram showing an example of a ranging system 1 according to a first approach. The ranging system 1 includes a landmark 2, a positioning system 3, a camera 4, a ranging device 5, and a ranging support device 6.

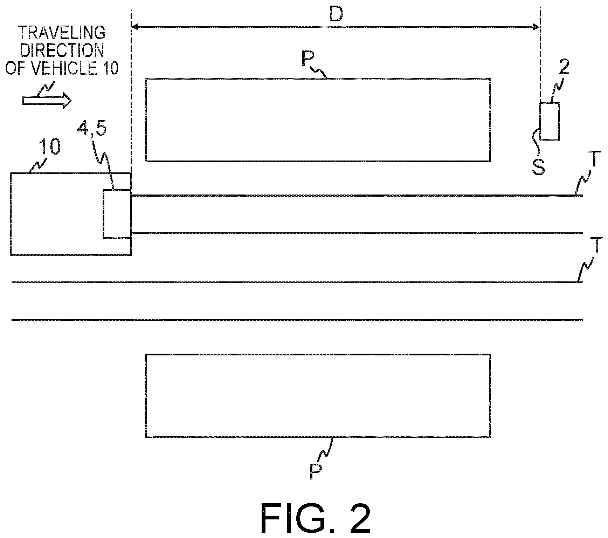

FIG. 2 is a diagram showing the ranging system 1 in operation. Of the ranging system 1, at least the camera 4 and the ranging device 5 are mounted on a vehicle 10, or more specifically, on a lead vehicle of the vehicle 10. The "lead vehicle" refers to a first vehicle in a traveling direction of the vehicle 10. The ranging system 1 is a system for measuring a distance from the vehicle 10 to the landmark 2. In the present approach, the vehicle 10 is described to be a train car that travels on a track T, but the vehicle 10 may instead be a car or the like.

The example in FIG. 2 shows a state where the vehicle 10 is approaching a platform P of a station. In the following, the distance between the vehicle 10 and the landmark 2 is described to be a distance of a component parallel to the traveling direction (a distance D shown in FIG. 2) among Euclidean distances between the vehicle 10 and the landmark 2. In the case where the vehicle 10 is a train car, the distance of the component parallel to the traveling direction may also be said to be a distance along the track T.

The landmark 2 is a mark that is used by a driver or an autonomous driving system controlling the vehicle 10 to determine a stop position or the like of the vehicle 10. In the example in FIG. 2, the landmark 2 is disposed near the platform P of the station, but the landmark 2 may instead be disposed on the platform P. Furthermore, the landmark may be disposed in a rail yard or the like.

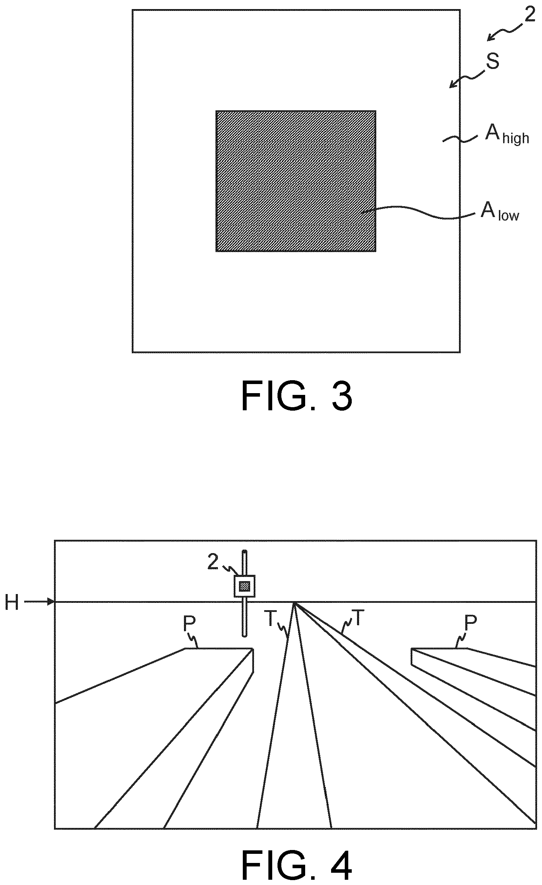

FIG. 3 is a front view of the landmark 2. The landmark 2 includes a main surface S. A plurality of areas with different reflectances are on the main surface S. In the example in FIG. 3, the landmark 2 includes an area $A_{high}$ and an area $A_{low}$ on the main surface S, and the area $A_{high}$ has higher reflectance than the area $A_{low}$, The reflectance is reflectance at a wavelength of laser light used by the ranging device 5.

The area $A_{high}$ has high reflectance, and thus, even when the distance to the ranging device 5 is great, the ranging device 5 may receive a sufficient amount of reflected laser light, and distance measurement is expected to be performed with high accuracy. In contrast, the area $A_{low}$ has low reflectance, and thus, even when the distance to the ranging device 5 is small, the reflected laser light may be received without being saturated, and distance measurement is expected to be performed with high accuracy. That is, at the time of measuring the distance from the vehicle 10 to the landmark 2, the distance is desirably measured mainly using laser light that is reflected from the area $A_{high}$ in the case where the landmark 2 is far from the vehicle 10, and by mainly using laser light that is reflected from the area $A_{low}$ in the case where the landmark 2 is close to the vehicle 10.

Furthermore, when the landmark 2 includes the main surface S where a plurality of areas with different reflectances are provided, a pattern is formed on the main surface S, and the landmark 2 is more accurately detected by a landmark detector 65 described later.

In the example shown in FIG. 3, the landmark 2 has a rectangular shape, but the landmark 2 may have any shape such as a circular or triangular shape. Furthermore, there may be three or more areas with different reflectances, and the areas may be arranged in any way (into any pattern).

The positioning system 3 is a system that measures a current position of the vehicle 10 in real time. For example, the positioning system 3 is a GPS (Global Positioning System), or a GNSS (Satellite positioning, navigation and timing system). The current position of the vehicle 10 may also be measured by using an inertial measurement unit instead of or in addition to the positioning system 3. The positioning system 3 may be a part of the ranging support device 6.

The camera 4 is a capturing device for capturing a front environment of the vehicle 10. For example, the camera 4 is a camera that generates a forward image as a first image by capturing the front environment of the vehicle 10. For example, the camera 4 is an optical camera such as a CCD (Charge Coupled Device) camera or a CMOS (Complementary Metal Oxide Semiconductor) camera, an infrared camera (thermography camera), a laser camera, or a combination thereof. In the case where the camera 4 includes an infrared camera, the landmark 2 may be easily detected at night, for example. In the case where the camera 4 includes a laser camera, a faraway environment may be more clearly captured. The forward image is a luminance image, for example, and each pixel value is a luminance value.

FIG. 4 is a diagram showing an example of the forward image generated by the camera 4. A reference sign H indicates the horizon. In the example in FIG. 4, the landmark 2 is shown in the forward image.

The ranging device 5 is a device or a sensor that measures a distance to the front environment of the vehicle 10, and that generates a second image that includes a measured distance in each pixel. More specifically, the ranging device 5 acquires a distance image that includes information about distances from various objects in the front environment of the vehicle 10 to the vehicle 10. The distance image may also be referred to as a depth image, depth data, distance data, or the like. The objects include the track T, and ground where the track T is disposed. The distance between an object and the vehicle 10 is, more precisely, a distance between the object and the ranging device 5. In the following, the ranging device 5 is described to be a LiDAR, but the ranging device 5 may instead be a radar. A wavelength of laser used by the ranging device 5 may be in an eye-safe band (such as 1.5 μm to 2.6 μm), for example.

For example, the ranging device 5 emits laser pulse, and scans a predetermined range of the front environment. Then, when pulse that is reflected and returned from an object in the front environment is received, the distance image including information about the distance from the vehicle 10 to the object in the front environment is generated.

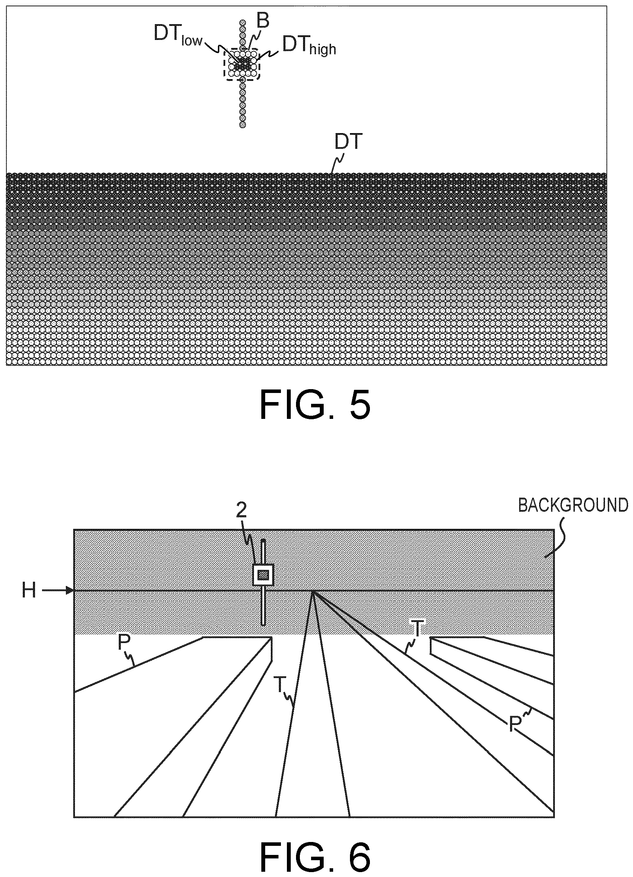

FIG. 5 is a diagram showing an example of the distance image generated by the ranging device 5. Pixels in the distance image are schematically indicated by circles (dots). Additionally, a field of view of the camera 4 is different from a field of view of the ranging device 5, but in the example in FIG. 5, it is assumed that correction is already performed to match the two. That is, correction is performed such that the ranging device 5 observes the front environment with a same point of view and a same angle of view as the camera 4. Furthermore, in the example shown in FIG. 5, the distance image that is three-dimensional information is converted into two-dimensional information to match the forward image. Additionally, a distance image acquirer 66 described later may perform the correction.

A pixel (dot) DT corresponds to a position (observation point) where one reflected pulse (at one time) is received. The distance image is expressed as a collection (point group) of a plurality of pixels DT. Each pixel DT has a pixel value that indicates a value of a distance from the train 10 (the ranging device 5) that is measured (i.e. measured distance).

Moreover, in the example in FIG. 5, intensity of the reflected pulse is indicated by brightness of the pixel DT, and a color of the pixel DT is shown to be brighter, the greater the intensity of the reflected pulse. The intensity of the reflected pulse is reduced, the farther away from the train 10. Moreover, as described later, in the example in FIG. 5, in a range B corresponding to the position of the landmark 2, a pixel $DT_{high}$ corresponding to the area $A_{high}$ is relatively bright, and a pixel $DT_{low}$ corresponding to the area $A_{low}$ is relatively dark.

A part where there is no pixel DT indicates that no reflected pulse is received, or in other words, that observation is not performed. When the train 10 is a certain distance away, an angle of incidence of pulsed light emitted by the ranging device 5 becomes great with respect to the ground or the track T, and in many cases, the reflected pulse is not returned, and observation is not made.

Additionally, in FIG. 2, the camera 4 and the ranging device 5 are disposed outside the vehicle 10, but the camera 4 and the ranging device 5 may instead be disposed inside the vehicle 10. In this case, the camera 4 and the ranging device 5 may perform capturing and distance measurement through a windshield of the vehicle 10. Furthermore, the ranging support device 6 may be mounted on the vehicle 10, or may be at a location different from the vehicle 10, such as an operation room for operating the vehicle 10.

As shown in FIG. 1, the ranging support device 6 is an information processing apparatus including a positioning data acquirer 61, an approximate distance calculator 62, an image acquirer 64, the distance image acquirer 66, the landmark detector 65, and a distance calculator 67. The ranging support device 6 is a device for calculating an accurate distance from the vehicle 10 to the landmark 2 based on the forward image acquired by the camera 4 and the distance image acquired by the ranging device 5.

The positioning data acquirer 61 acquires, from the positioning system 3, positioning data including a current position of the vehicle 10. The positioning data acquirer 61 may keep acquiring the positioning data from the positioning system 3 in real time, or may acquire the positioning data when the vehicle 10 is moved. For example, an amount of movement of the vehicle 10 may be measured by an inertial measurement unit mounted on the vehicle 10, and the positioning data may be acquired when the amount of movement reaches or exceeds a certain amount.

The approximate distance calculator 62 calculates the distance from the vehicle 10 to the landmark 2 based on the positioning data acquired and position information of the landmark 2 stored in a landmark information storage 63. A distance that is calculated based on the positioning data is referred to as an approximate distance. Additionally, the positioning data may include the position information of the landmark 2. In this case, the approximate distance calculator 62 may calculate the approximate distance based on the current position of the vehicle 10 and the position of the landmark 2 included in the positioning data.

The landmark information storage 63 stores information about the landmark 2. For example, information about the landmark 2 includes, in relation to the landmark 2 at each station, the shape, the size, the pattern, the height, and the arranged position. The height of the landmark 2 may be a height from the ground, or may be altitude or elevation, for example.

Furthermore, the approximate distance calculator 62 determines whether the approximate distance that is calculated is equal to or smaller than a first threshold or not. For example, the first threshold corresponds to a maximum value of distance at which the landmark detector 65, described later, is able to detect the landmark 2, or a maximum value of distance at which the camera 4 is able to capture the landmark 2 with a resolution at which identification is possible. Alternatively, the first threshold may be a maximum value of distance at which the ranging device 5 is able to measure the distance to the landmark 2, for example. That is, the first threshold is a distance from the vehicle 10 to the landmark 2 or a value that is correlated with the distance, with which detection of the landmark 2 and/or measurement of the distance to the landmark 2 can be performed. Details of the first threshold will be given later.

The image acquirer 64 corresponds to a first image acquirer that acquires the forward image that is generated by the camera 4. The image acquirer 64 may keep acquiring the forward image from the camera 4 in real time, or may acquire the forward image when the vehicle 10 is moved.

The landmark detector 65 detects the landmark 2 from the forward image. For example, a size (number of pixels) of the landmark 2 in the forward image is calculated based on a parameter of the camera 4, actual shape, size and pattern of the landmark 2 obtained from the landmark information storage 63, the approximate distance to the landmark 2, and the like. A parameter of the camera 4 may be an internal parameter of the camera 4 or an external parameter or both. A technique such as semantic segmentation may be used for detection of the landmark 2.

Moreover, the landmark detector 65 creates a template image of the landmark 2 with the calculated size of the landmark 2, based on information about at least one of the shape and the pattern of the landmark 2, for example, and the position of the landmark 2 in the forward image is detected using a template matching method or the like. The template image of the landmark 2 is an image that shows the landmark 2 itself, as in FIG. 4, for example. Moreover, thanks to the pattern on the main surface S of the landmark 2, the landmark 2 may be detected with higher accuracy.

In the case where the camera 4 includes a laser camera, the forward image is acquired as a luminance image of reflected laser light as shown in FIG. 6. A background of the landmark 2 (hatched part) is observed as a part where reflected laser light is not returned to the camera 4 and luminance uniformly takes a minimum value.

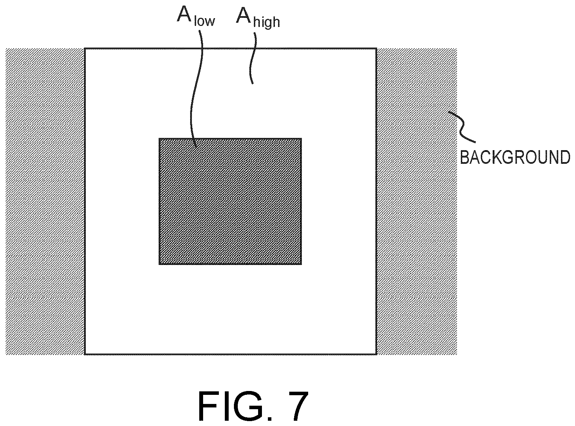

Moreover, as in the example in FIG. 7, the landmark detector 65 may create a template image including a background in at least one of above, below, left, and right or in all directions of the landmark 2, and may perform detection of the landmark 2. The example in FIG. 7 shows a template image where the background is included on the left and right of the landmark 2. As the background, luminance of the minimum value (such as black) with no reflection is used. When the background of the landmark 2 is included in the template image in the manner described above, a boundary between the background of the landmark 2 and the landmark 2 becomes clear, and the position of the landmark 2 may be more efficiently detected.

Detection of the landmark 2 by the landmark detector 65 is started after the approximate distance is determined to be equal to or smaller than the first threshold. This is because it is not reasonable to start detection of the landmark 2 in a state where detection of the landmark 2 and/or measurement of the distance to the landmark 2 is not possible.

For example, in the case where the approximate distance is determined to be equal to or smaller than the first threshold, the landmark detector 65 itself may start detection of the landmark 2, or the image acquirer 64 may start acquisition of the forward image from the camera 4, or the camera 4 may start acquisition of the forward image. In any case, when the approximate distance is determined by the approximate distance calculator 62 to be equal to or smaller than the first threshold, the landmark detector 65 starts detection of the landmark 2. In the present approach, a description is given assuming that the image acquirer 64 starts acquisition of the forward image when the approximate distance is determined to be equal to or smaller than the first threshold.

The distance image acquirer 66 corresponds to a second image acquirer that acquires the distance image (see FIG. 5) that is generated by the ranging device 5. The distance image acquirer 66 acquires the distance image at substantially the same time (substantially the same frame) as the forward image that is acquired by the image acquirer 64. The distance image acquirer 66 may keep acquiring the distance image from the ranging device 5 in real time, or may acquire the distance image when the vehicle 10 is moved. Additionally, due to the same reason as for the landmark detector 65, the distance image acquirer 66 may start acquisition of the distance image when the approximate distance is determined to be equal to or smaller than the first threshold.

The distance image includes, on a per-area basis, measured distances from the train 10 to the plurality of areas with different reflectances. Furthermore, the distance image acquirer 66 may convert a measured distance from the train 10 to an object, included in the distance image, from a Euclidean distance to a distance of a component in a traveling direction of the train 10.

The distance calculator 67 calculates the distance to the landmark 2 based on the measured distances to the plurality of areas with different reflectances on the main surface S of the landmark 2. The distance to the landmark 2 that is calculated at this time is referred to as a combined distance.

The distance calculator 67 first identifies a pixel DT in the range B in the distance image to be an observation point on the landmark 2, based on the position of the landmark 2 detected in the forward image (see FIG. 4) and the distance image (see FIG. 5). Then, the distance calculator 67 further identifies that the pixel $DT_{high}$ is an observation point corresponding to the area $A_{high}$, and that the pixel $DT_{low}$ is an observation point corresponding to the area $A_{low}$. In other words, the distance calculator 67 identifies the measured distance of each of the plurality of areas with different reflectances. The measured distance of each area is an average of the measured distances of the pixels DT corresponding to each area, for example.

Then, the distance calculator 67 calculates the combined distance by combining the measured distance of the pixel $DT_{high}$ and the measured distance of the pixel $DT_{low}$. The combined distance is calculated by using the measured distance from the ranging device 5, and is thus expected to be more accurate than the approximate distance.

In the following, an example of a calculation method of the combined distance will be described using Expression (1). The combined distance is calculated by combining the measured distance of each area of the landmark 2. In the example of the landmark 2 shown in FIG. 3, a measured distance $D_{high}$ of the area $A_{high}$ and a measured distance $D_{low}$ of the area $A_{low}$ are combined using a combination coefficient K(D).

K(D) is a combination coefficient where $0 \leq K(D) \leq 1$. K(D) is a function with respect to the distance D, and is a step function or a monotonically increasing function, for example. The distance D is $D_{high}$ or $D_{low}$ or an average of the two. The distance D may be the approximate distance. That is, the distance D has a value that is based on at least one of $D_{high}$, $D_{low}$, and the approximate distance.

[Math. 1]

$$\text{Combined Distance} = \left(1 - K(D)\right)D_{high} + K(D)\,D_{low} \quad (1)$$

As indicated by Expression (1), the distance calculator 67 calculates the combined distance by weighting the measured distance of each area according to the distance between the vehicle 10 and the landmark 2 and performing combination. More specifically, in the case where the vehicle 10 is far from the landmark 2, the combined distance is calculated based mainly on $D_{high}$, and in the case where the vehicle 10 is close to the landmark 2, the combined distance is calculated based mainly on $D_{low}$. Accordingly, the combined distance may be accurately calculated even in a case where the distance from the vehicle 10 to the landmark 2 is great or small.

The same can be said for a case where there are three or more areas with different reflectances on the main surface S of the landmark 2. It is assumed that the landmark 2 includes areas $A_1$, $A_2$, ..., $A_N$ ($N \geq 3$) on the main surface S, and that the distance from the train 10 to the area $A_n$ ($1 \leq n \leq N$) is a measured distance $D_n$. In this case, Expression (1) is generalized as Expression (2). $K_n(D)$ is a combination coefficient where $\sum_{n=1}^{N} K_n(D) = 1$. $K_n(D)$ is a function with respect to the distance D, and is a pulse function or a window function that takes a value only in a specific distance range, for example. The distance D may be one of the measured distances $D_n$, or an average value thereof. The distance D may be an approximate distance.

[Math. 2]

$$\text{Combined Distance} = \sum_{n=1}^{N} K_n(D)\,D_n \quad (2)$$

Furthermore, after calculating the combined distance, the distance calculator 67 outputs the combined distance. For example, the combined distance may be output to a display that can be seen by the driver of the vehicle 10, or the combined distance may be output to the autonomous driving system of the vehicle 10.

Moreover, after calculating the combined distance, the distance calculator 67 determines whether the combined distance is equal to or smaller than a second threshold or not. For example, the second threshold corresponds to the distance from the vehicle 10 to the landmark 2 when a stop position is reached by the vehicle 10, or the distance when the landmark 2 moves out of the field of view of the ranging device 5.

<Flowchart>

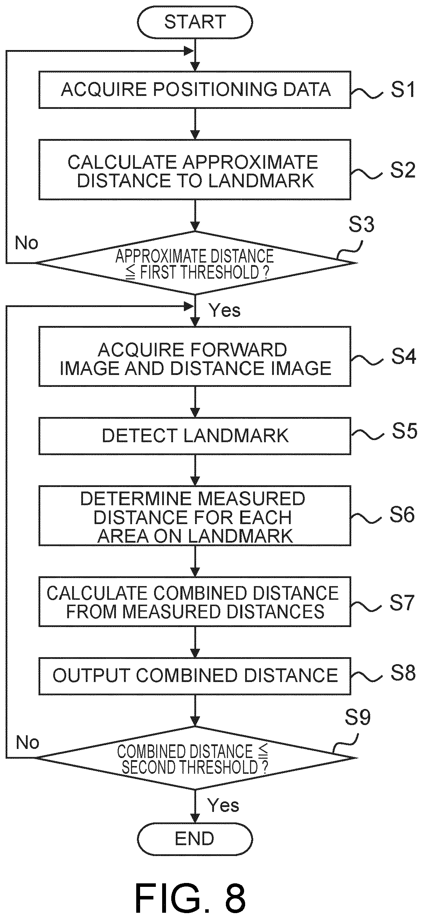

FIG. 8 is a flowchart describing an example of a process that is performed by the ranging support device 6. In the following, a process that is performed by the ranging support device 6 will be described with reference to FIG. 8.

First, the positioning data acquirer 61 acquires, from the positioning system 3, positioning data including the current position of the vehicle 10 (step S1).

Next, the approximate distance calculator 62 calculates the distance (approximate distance) between the vehicle 10 and the landmark 2 based on the positioning data and the position of the landmark 2 (step S2). The position of the landmark 2 is known, and is stored in the landmark information storage 63.

Next, the approximate distance calculator 62 determines whether the approximate distance calculated is equal to or smaller than the first threshold or not (step S3). In the case where the approximate distance is determined by the approximate distance calculator 62 to be greater than the first threshold (step S3: No), step S1 is performed again, and the positioning data acquirer 61 acquires the positioning data again.

In the case where the approximate distance is determined by the approximate distance calculator 62 to be equal to or smaller than the first threshold (step S3: Yes), the image acquirer 64 starts to acquire the forward image from the camera 4 and the distance image acquirer 66 starts to acquire the distance image from the ranging device 5 substantially at the same time (substantially in the same frame) (step S4).

Next, the landmark detector 65 detects the landmark 2 based on the forward image acquired (step S5).

Next, the distance calculator 67 determines the measured distance for each of the areas with different reflectances on the landmark 2 (step S6).

Next, the distance calculator 67 calculates the combined distance by combining the plurality of measured distances (step S7).

Next, the distance calculator 67 outputs the combined distance (step S8).

Next, the distance calculator 67 determines whether the combined distance calculated is equal to or smaller than the second threshold or not (step S9). In the case where the combined distance is determined to be greater than the second threshold (step S9: No), step S4 is performed again.

In the case where the combined distance is determined to be equal to or smaller than the second threshold (step S9: Yes), the process is ended. Additionally, each step may be performed in parallel with another step. For example, the positioning data acquirer 61 may keep acquiring the positioning data from the positioning system 3 while the approximate distance calculator 62 calculates the approximate distance in step S2.

As described above, the distance from the vehicle 10 to the landmark 2 is roughly calculated by using the positioning data by the processes in steps S1 and S2, and in the case where the approximate distance is equal to or smaller than the first threshold, the distance from the vehicle 10 to the landmark 2 is more accurately calculated by the processes in steps S4 to S7 by using the distance image acquired by the ranging device 5.

As described above, in the present approach, the distance from the vehicle 10 to the landmark 2 is calculated based on the measured distances that are obtained by measuring the distance for each of the areas on the landmark 2 having the main surface where a plurality of areas with different reflectances are provided. A weight for each reflectance on the landmark 2 is changed according to the distance from the vehicle 10 to the landmark 2, and the combined distance is calculated. Accordingly, measurement of the distance to the landmark 2 may be more accurately performed in a greater distance measuring range. Accordingly, even in the case where the vehicle 10 is a train or the like and the braking distance is relatively long, distance to the landmark 2 may be accurately measured, and thus, more accurate control may be performed at the time of the autonomous driving system stopping the vehicle 10, for example. Furthermore, because there is a pattern on the main surface of the landmark, the landmark may be detected more accurately.

Furthermore, the ranging support device 6 changes the calculation method for the distance D based on whether the distance from the vehicle 10 to the landmark 2 is equal to or smaller than the first threshold or not, between the method of calculating the approximate distance using the positioning data and the method of calculating the combined distance using the distance image and the forward image. Accordingly, efficient calculation of the distance D may be achieved.

(Another Example Operation 1)

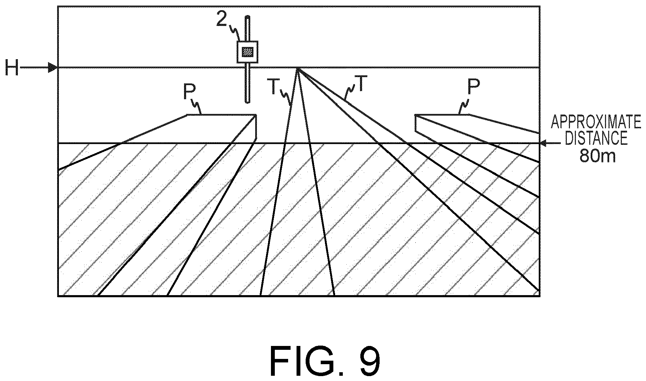

FIG. 9 is a diagram describing another example operation of the landmark detector 65. As shown in FIG. 9, the landmark detector 65 may delete a part of the forward image, and detect the landmark 2.

For example, it is assumed that the approximate distance from the vehicle 10 to the landmark 2 is known to be 100 m by the approximate distance calculator 62. Next, a range L1 that is a specific distance from the landmark 2 (for example, a range of 20 m before and after the landmark 2) is specified in the distance image (see FIG. 5), in relation to the approximate distance, based on pixel values (distance values) included in the distance image. The landmark 2 is expected to be positioned in the range. A range corresponding to the range specified in the distance image is specified in the forward image, and detection of the landmark 2 is performed in the specified range. That is, detection of the landmark 2 is started by excluding or deleting a range other than the specified range from the forward image. A range from which the landmark 2 is to be detected is thus reduced, and detection of the landmark 2 may be more efficiently performed.

Furthermore, the method of deleting a part of the forward image is not limited to the method described above. For example, it is assumed that it is known that, depending on the angle of view of the camera 4 or the height of the landmark 2, if the vehicle 10 is at a position before the stop position, the landmark 2 is not positioned in a lower half of the forward image. In such a case, a lower part of the forward image may be specified as a range where the landmark 2 is not present, and the specified range may be excluded from the range from which the landmark 2 is to be detected (the specified range may be deleted from the forward image).

Furthermore, other than the lower part of the forward image, if it is known that the landmark 2 is on the left side of the track T, for example, the right side in the forward image may be specified as the range not including the landmark 2 and may be deleted. Alternatively, if it is known that the landmark 2 will appear at about the same height as a horizon H in the forward image, the horizon H may be detected in the forward image, a range other than a range close to the horizon H may be specified as a range not including the landmark 2 and may be excluded from the range from which the landmark 2 is to be detected.

(Another Example Operation 2)

The ranging support device 6 may operate in conjunction with a brake control system of the train. The brake control system may perform brake control on the vehicle according to the combined distance output by the ranging support device 6. A value corresponding to the stop position of the train may be taken as the second threshold, and the brake control system may perform control such that the train is completely stopped when the combined distance reaches the second threshold.

(Second Approach)

In the first approach, the forward image is acquired using the camera 4, and the position of the landmark 2 is detected from the forward image. However, the landmark 2 may be detected from the distance image (see FIG. 5) acquired by the ranging device 5. In a second approach, a description will be given of a case where the landmark 2 is detected from the distance image acquired by the ranging device 5.

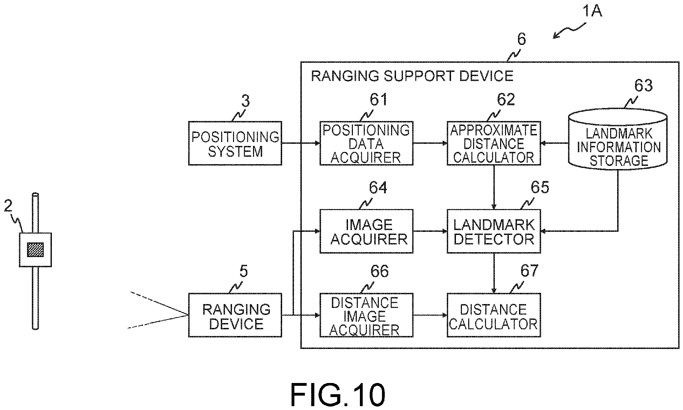

FIG. 10 is a block diagram showing a ranging system 1A according to the second approach. Elements with the same name or function as that in FIG. 1 in the first approach described above is denoted by the same reference signs. In the following, description of matters other than those that are changed or added will be omitted.

In the ranging system 1A, the ranging device 5 serves also as the camera 4 in the first approach. Accordingly, the camera 4 is omitted.

As the forward image, the image acquirer 64 acquires the distance image as shown in FIG. 5 in the first approach. That is, in the present approach, the forward image shows an intensity distribution of reflected laser light that is emitted by the ranging device 5 and reflected by the landmark 2. Additionally, in the first approach, the field of view of the camera 4 and the field of view of the ranging device 5 are different, but in the present approach, the two coincides with each other, and correction does not have to be performed.

As in the first approach, the landmark detector 65 performs detection of the landmark 2. The template image here is expressed by an intensity distribution of light.

As described above, in the second approach, the intensity distribution of reflected laser light that is emitted by the ranging device 5 and reflected by the landmark 2 is taken as the forward image. Accordingly, it is not necessary to prepare a camera for capturing the forward image, and size of the entire system may be reduced and cost may be reduced.

(Hardware configuration)

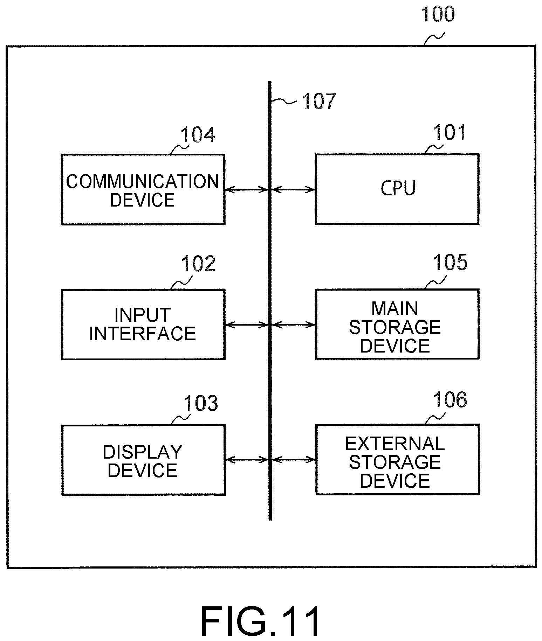

FIG. 11 illustrates a hardware configuration of the information processing device according to each approach. The information processing device is configured as a computer device 100. The computer device 100 includes a CPU 101, an input interface 102, a display device 103, a communication device 104, a main storage device 105, and an external storage device 106, and these components are mutually connected through a bus 107.

The CPU (central processing unit) 101 executes an information processing program as a computer program on the main storage device 105. The information processing program is a computer program configured to achieve each above-described functional composition of the present device. The information processing program may be achieved by a combination of a plurality of computer programs and scripts instead of one computer program. Each functional composition is achieved as the CPU 101 executes the information processing program.

The input interface 102 is a circuit for inputting, to the present device, an operation signal from an input device such as a keyboard, a mouse, or a touch panel. The input interface 102 corresponds to the input device in each approach.

The display device 103 displays data output from the present device. The display device 103 is, for example, a liquid crystal display (LCD), an organic electroluminescence display, a cathode-ray tube (CRT), or a plasma display (PDP) but is not limited thereto. Data output from the computer device 100 can be displayed on the display device 103. The display device 103 corresponds to the output device in each approach.

The communication device 104 is a circuit for the present device to communicate with an external device in a wireless or wired manner. Data can be input from the external device through the communication device 104. The data input from the external device can be stored in the main storage device 105 or the external storage device 106.

The main storage device 105 stores, for example, the information processing program, data necessary for execution of the information processing program, and data generated through execution of the information processing program. The information processing program is loaded and executed on the main storage device 105. The main storage device 105 is, for example, a RAM, a DRAM, or an SRAM but is not limited thereto. Each storage or database in the information processing device in each approach may be implemented on the main storage device 105.

The external storage device 106 stores, for example, the information processing program, data necessary for execution of the information processing program, and data generated through execution of the information processing program. The information processing program and the data are read onto the main storage device 105 at execution of the information processing program. The external storage device 106 is, for example, a hard disk, an optical disk, a flash memory, or a magnetic tape but is not limited thereto. Each storage or database in the information processing device in each approach may be implemented on the external storage device 106.

The information processing program may be installed on the computer device 100 in advance or may be stored in a storage medium such as a CD-ROM. Moreover, the information processing program in each approach may be uploaded on the Internet.

The present device may be configured as a single computer device 100 or may be configured as a system including a plurality of mutually connected computer devices 100.

The approaches as described before may be configured as below.

(Clauses)

Clause 1. A ranging support device comprising:

a first image acquirer configured to acquire a first image that is generated by a capturing device of a vehicle that captures a front environment including a landmark, the landmark including a main surface where a plurality of areas with different reflectances are provided;

a landmark detector configured to detect a position of the landmark in the first image;

a second image acquirer configured to acquire a second image that is generated by a ranging device that measures a distance with respect to the front environment; and

a distance calculator configured to specify, in the second image, each of areas corresponding to the plurality of areas on the landmark included in the first image, calculate distances between the plurality of areas on the landmark and the vehicle based on pixel values of the areas specified, and calculate a distance between the vehicle and the landmark based on the distances calculated for each of the areas.

Clause 2. The ranging support device according to clause 1, wherein the distance calculator calculates the distance from the vehicle to the landmark by combining the distances of the areas.

Clause 3. The ranging support device according to clause 2, wherein the distance calculator determines weights of the distances of the areas according to one value among the distances of the areas or an average of the distances, and combines the distances of the areas based on the weights.

Clause 4. The ranging support device according to clause 2 or 3, comprising:

a positioning data acquirer configured to acquire positioning data of a position of the vehicle from a positioning system; and

an approximate distance calculator configured to calculate an approximate distance between the vehicle and the landmark based on the positioning data and position information of the landmark, wherein the distance calculator determines weights of the distances of the areas based on the approximate distance, and combines the distances of the areas based on the weights.

Clause 5. The ranging support device according to any one of clauses 2 to 4, comprising:

a positioning data acquirer configured to acquire positioning data including a position of the vehicle from a positioning system; and

an approximate distance calculator configured to calculate an approximate distance between the vehicle and the landmark based on the positioning data and position information of the landmark, wherein the landmark detector starts detection of the position of the landmark when the approximate distance is equal to or smaller than a first threshold.

Clause 6. The ranging support device according to any one of clauses 1 to 5, comprising:

a positioning data acquirer configured to acquire positioning data including a position of the vehicle from a positioning system; and

an approximate distance calculator configured to calculate an approximate distance between the vehicle and the landmark based on the positioning data and position information of the landmark, wherein the landmark detector determines a number of pixels of the landmark in the first image based on information about the landmark and the approximate distance, creates a template image of the landmark based on the number of pixels, and performs detection of the landmark by template matching using the first image and the template image.

Clause 7. The ranging support device according to clause 6, comprising:

a positioning data acquirer configured to acquire positioning data including a position of the vehicle from a positioning system; and

an approximate distance calculator configured to calculate an approximate distance between the vehicle and the landmark based on the positioning data and position information of the landmark, wherein

the landmark detector specifies, in the second image, a distance range depending on the approximate distance, and performs detection of the landmark by template matching using an image part of the first image corresponding to the distance range specified and the template image.

Clause 8. The ranging support device according to clause 6 or 7, wherein the landmark detector creates a template image including the landmark and at least a part of a background surrounding the landmark, and performs detection of the landmark by template matching using the first image and the template image.

Clause 9. The ranging support device according to any one of clauses 1 to 8, wherein the landmark detector specifies, in the first image, a range not including the landmark, based on a relationship between a position of the capturing device and the position of the landmark, and performs detection of the landmark from a range other than the range specified.

Clause 10. The ranging support device according to any one of clauses 1 to 8, wherein the vehicle is a train.

Clause 11. A ranging system comprising:

a capturing device configured to capture a front environment including a landmark, the landmark including a main surface where a plurality of areas with different reflectances are provided, the capturing device being provided in a vehicle;

a ranging device that measures a distance with respect to the front environment;

a first image acquirer configured to acquire a first image that is generated by the capturing device;

a landmark detector configured to detect a position of the landmark in the first image;

a second image acquirer configured to acquire a second image that is generated by the ranging device; and

a distance calculator configured to specify, in the second image, each of areas corresponding to the plurality of areas on the landmark included in the first image, calculate distances between the plurality of areas on the landmark and the vehicle based on pixel values of the areas specified, and calculate a distance between the vehicle and the landmark based on the distances calculated for each of the areas.

Clause 12. A ranging support method comprising:

acquiring a first image that is generated by a capturing device of a vehicle that captures a front environment including a landmark, the landmark including a main surface where a plurality of areas with different reflectances are provided;

detecting a position of the landmark in the first image;

acquiring a second image that is generated by a ranging device that measures a distance with respect to the front environment;

specifying, in the second image, each of areas corresponding to the plurality of areas on the landmark included in the first image;

calculating distances between the plurality of areas on the landmark and the vehicle based on pixel values of the areas specified; and

calculating a distance between the vehicle and the landmark based on the distances calculated for each of the areas.

While certain arrangements have been described, these arrangements have been presented by way of example only, and are not intended to limit the scope of the inventions. Indeed, the apparatuses* described herein may be embodied in a variety of other forms; furthermore various omissions, substitutions and changes in the form of the apparatuses described herein may be made.

**Claims**

1. A ranging support device comprising:

a first image acquirer configured to acquire a first image that is generated by a capturing device of a vehicle that captures a front environment including a landmark, the landmark including a main surface where a plurality of areas with different reflectances are provided;

a landmark detector configured to detect a position of the landmark in the first image;

a second image acquirer configured to acquire a second image that is generated by a ranging device that measures a distance with respect to the front environment; and

a distance calculator configured to specify, in the second image, each of areas corresponding to the plurality of areas on the landmark included in the first image, calculate distances between the plurality of areas on the landmark and the vehicle based on pixel values of the areas specified, and calculate a distance between the vehicle and the landmark based on the distances calculated for each of the areas.

2. The ranging support device according to claim 1, wherein the distance calculator calculates the distance from the vehicle to the landmark by combining the distances of the areas.

3. The ranging support device according to claim 2, wherein the distance calculator determines weights of the distances of the areas according to one value among the distances of the areas or an average of the distances, and combines the distances of the areas based on the weights.

4. The ranging support device according to claim 2 or 3, comprising:

a positioning data acquirer configured to acquire positioning data of a position of the vehicle from a positioning system; and

an approximate distance calculator configured to calculate an approximate distance between the vehicle and the landmark based on the positioning data and position information of the landmark, wherein

the distance calculator determines weights of the distances of the areas based on the approximate distance, and combines the distances of the areas based on the weights.

5. The ranging support device according to any one of claims 2 to 4, comprising:

a positioning data acquirer configured to acquire positioning data including a position of the vehicle from a positioning system; and

an approximate distance calculator configured to calculate an approximate distance between the vehicle and the landmark based on the positioning data and position information of the landmark, wherein

the landmark detector starts detection of the position of the landmark when the approximate distance is equal to or smaller than a first threshold.

6. The ranging support device according to any one of claims 1 to 5, comprising:

a positioning data acquirer configured to acquire positioning data including a position of the vehicle from a positioning system; and

an approximate distance calculator configured to calculate an approximate distance between the vehicle and the landmark based on the positioning data and position information of the landmark, wherein

the landmark detector determines a number of pixels of the landmark in the first image based on information about the landmark and the approximate distance, creates a template image of the landmark based on the number of pixels, and performs detection of the landmark by template matching using the first image and the template image.

7. The ranging support device according to claim 6, comprising:

a positioning data acquirer configured to acquire positioning data including a position of the vehicle from a positioning system; and

an approximate distance calculator configured to calculate an approximate distance between the vehicle and the landmark based on the positioning data and position information of the landmark, wherein

the landmark detector specifies, in the second image, a distance range depending on the approximate distance, and performs detection of the landmark by template matching using an image part of the first image corresponding to the distance range specified and the template image.

8. The ranging support device according to claim 6 or 7, wherein the landmark detector creates a template image including the landmark and at least a part of a background surrounding the landmark, and performs detection of the landmark by template matching using the first image and the template image.

9. The ranging support device according to any one of claims 1 to 8, wherein the landmark detector specifies, in the first image, a range not including the landmark, based on a relationship between a position of the capturing device and the position of the landmark, and performs detection of the landmark from a range other than the range specified.

10. The ranging support device according to any one of claims 1 to 8, wherein the vehicle is a train.

11. A ranging system comprising:

a capturing device configured to capture a front environment including a landmark, the landmark including a main surface where a plurality of areas with different reflectances are provided, the capturing device being provided in a vehicle;
a ranging device that measures a distance with respect to the front environment;
a first image acquirer configured to acquire a first image that is generated by the capturing device;
a landmark detector configured to detect a position of the landmark in the first image;
a second image acquirer configured to acquire a second image that is generated by the ranging device; and
a distance calculator configured to specify, in the second image, each of areas corresponding to the plurality of areas on the landmark included in the first image, calculate distances between the plurality of areas on the landmark and the vehicle based on pixel values of the areas specified, and calculate a distance between the vehicle and the landmark based on the distances calculated for each of the areas.

12. A ranging support method comprising:

acquiring a first image that is generated by a capturing device of a vehicle that captures a front environment including a landmark, the landmark including a main surface where a plurality of areas with different reflectances are provided;
detecting a position of the landmark in the first image;
acquiring a second image that is generated by a ranging device that measures a distance with respect to the front environment;
specifying, in the second image, each of areas corresponding to the plurality of areas on the landmark included in the first image;
calculating distances between the plurality of areas on the landmark and the vehicle based on pixel values of the areas specified; and
calculating a distance between the vehicle and the landmark based on the distances calculated for each of the areas.

FIG. 1

FIG. 2

FIG. 3

FIG. 4

FIG. 5

FIG. 6

FIG. 7

START

ACQUIRE POSITIONING DATA — S1

CALCULATE APPROXIMATE
DISTANCE TO LANDMARK — S2

S3

No

APPROXIMATE DISTANCE
≦ FIRST THRESHOLD ?

Yes

ACQUIRE FORWARD
IMAGE AND DISTANCE IMAGE — S4

DETECT LANDMARK — S5

DETERMINE MEASURED
DISTANCE FOR EACH
AREA ON LANDMARK — S6

CALCULATE COMBINED DISTANCE
FROM MEASURED DISTANCES — S7

OUTPUT COMBINED DISTANCE — S8

S9

No

COMBINED DISTANCE ≦
SECOND THRESHOLD ?

Yes

END

# FIG. 8

FIG. 9

1A

6

RANGING SUPPORT DEVICE

63

LANDMARK
INFORMATION
STORAGE

3

POSITIONING
SYSTEM

61

POSITIONING
DATA
ACQUIRER

62

APPROXIMATE
DISTANCE
CALCULATOR

2

64

IMAGE
ACQUIRER

65

LANDMARK
DETECTOR

5

RANGING
DEVICE

66

DISTANCE
IMAGE
ACQUIRER

67

DISTANCE
CALCULATOR

FIG.10

100

107

104
COMMUNICATION
DEVICE

101
CPU

102
INPUT
INTERFACE

105
MAIN
STORAGE
DEVICE

103
DISPLAY
DEVICE

106
EXTERNAL
STORAGE
DEVICE

# FIG.11

Europäisches
Patentamt

European
Patent Office

Office européen
des brevets

# EUROPEAN SEARCH REPORT

| Application Number |
| --- |
| EP 24 15 8983 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | JP 7 038694 B2 (PIONEER ELECTRONIC CORP) 18 March 2022 (2022-03-18) * abstract; figures 1 3, 6-8 * * paragraphs [0030], [0031] - [0034], [0041], [0045] * | 1-12 | INV. G01S7/41 G01S13/931 |
| A | US 2020/200545 A1 (WAPPLER STEFAN [DE] ET AL) 25 June 2020 (2020-06-25) * abstract; figures 1-3 * * paragraphs [0031] - [0034] * | 1-12 | |
| A | KR 2021 0046501 A (KOREA AUTOMOTIVE TECH INST [KR]) 28 April 2021 (2021-04-28) * abstract; figures 8, 9 * * paragraphs [0004], [0006], [0014] * | 1-12 | |

| TECHNICAL FIELDS SEARCHED (IPC) |
| --- |
| G01S |

The present search report has been drawn up for all claims

| Place of search | Date of completion of the search | Examiner |
| --- | --- | --- |
| Munich | 16 July 2024 | Cordeiro, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 15 8983

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2024

| Patent document cited in search report | | Publication date | Patent family member(s) | | Publication date |
|---|---|---|---|---|---|
| JP 7038694 | B2 | 18-03-2022 | JP | 7038694 B2 | 18-03-2022 |
| | | | JP | 2020052062 A | 02-04-2020 |
| | | | JP | 2022082571 A | 02-06-2022 |
| | | | JP | 2023133395 A | 22-09-2023 |
| US 2020200545 | A1 | 25-06-2020 | CN | 111353522 A | 30-06-2020 |
| | | | DE | 102018133441 A1 | 25-06-2020 |
| | | | EP | 3671546 A1 | 24-06-2020 |
| | | | US | 2020200545 A1 | 25-06-2020 |
| KR 20210046501 | A | 28-04-2021 | NONE | | |

EPO FORM P0459

For more details about this annex : see Official Journal of the European Patent Office, No. 12/82